Europäisches Patentamt

European Patent Office

Office européen des brevets

(19)

(11) Veröffentlichungsnummer : **0 140 021
B1**

(12) **EUROPÄISCHE PATENTSCHRIFT**

(45) Veröffentlichungstag der Patentschrift :
21.10.87

(21) Anmeldenummer : 84110331.0

(22) Anmeldetag : 30.08.84

(51) Int. Cl.⁴ : **H 01 M   6/04**, H 01 M   2/16,
**H 01 M   2/08**

(54) **Bei hoher Temperatur entladbares galvanisches Primärelement.**

(30) Priorität : 15.10.83 DE 3337570

(43) Veröffentlichungstag der Anmeldung :
08.05.85 Patentblatt 85/19

(45) Bekanntmachung des Hinweises auf die Patenterteilung : 21.10.87 Patentblatt 87/43

(84) Benannte Vertragsstaaten :
BE CH DE FR GB IT LI NL

(56) Entgegenhaltungen :
EP-A- 0 008 541
DE-A- 2 743 197
DE-B- 2 232 153
US-A- 3 287 166
US-A- 4 085 241

(73) Patentinhaber : VARTA·Batterie Aktiengesellschaft
Am Leineufer 51
D-3000 Hannover 21 (DE)

(72) Erfinder : Brenner, Rolf
Hardtweg 10
D-7095 Rainau (DE)
Erfinder : Jose, Horst-Udo
Bachstrasse 12
D-7188 Fichtenau 2 (DE)
Erfinder : Jung, Gerd
Enzstrasse 1
D-7090 Ellwangen-Rindelbach (DE)
Erfinder : Köder, Robert
Hirschweg 4
D-7090 Ellwangen-Rotenbach (DE)

(74) Vertreter : Kaiser, Dieter Ralf, Dipl.-Ing.
Gundelhardtstrasse 72
D-6233 Kelkheim/Ts. (DE)

## Beschreibung

Die Erfindung betrifft ein bei hoher Temperatur entladbares galvanisches Primärelement mit alkalischem Elektrolyten, negativer Zinkelektrode, positiver Silber(I)-oxid- oder Braunsteinelektrode und mit einem becherförmigen Metallgehäuse, welches in konzentrischer Anordnung eine innere Zinkelektrode und eine äußere positive Elektrode in Form eines Ringzylinders mit zwischenliegendem Separator enthält, wobei das offene Ende des Metallgehäuses mit einer Dichtung aus Kunststoff verschlossen ist, durch welches sich der negative Stromableiter erstreckt.

In der Technik besteht Bedarf an elektrochemischen Stromquellen, die auch unter extremen Temperaturbedingungen die netzunabhängige Energieversorgung von Geräten und Beleuchtungskörpern sicherstellen. Beispielsweise sind für den Einsatz in Polarregionen oder für meteorologische Sonden Batterien mit entsprechenden Tieftemperatureigenschaften dank nichtfrierender Elektrolyte erforderlich und die Exploration und Hebung von Bodenschätzen aus großen Tiefen erfordert batteriebetriebene Hilfseinrichtungen, die in die Bohrlöcher hinabgelassen werden und die bei Temperaturen von oft mehr als 100 °C noch zuverlässig arbeiten sollen.

Die batterietechnische Beherrschung des Temperaturbereiches etwa zwischen 80° und 160 °C ist bis heute lückenhaft, weil der bereits erhebliche Dampfdruck der Elektrolytflüssigkeit und vor allem der verstärkte Abbau des zumeist organischen Scheidermaterials in konventionellen Batterien deren Funktionsfähigkeit bald unterbindet und andererseits der nämliche Temperaturbereich für den alternativen Einsatz von Zellen mit schmelzflüssigen Elektrolyten bei weitem zu niedrig liegt.

Aus der US-PS 3 287 166 ist eine noch bei 100 °C und darüber betriebbare Zelle auf Basis der Systeme Silberoxid/Zink und Nickeloxid/Cadmium bekannt, bei welcher der die Elektrodenpolaritäten trennende Scheider beidseitig eine Auflage aus einem anorganischen Fasermaterial (anorganisches Faserpapier) besitzt. Der Scheider selbst kann ebenfalls anorganischer, aber auch organischer Natur sein.

Die DE-OS 2 743 197 beschreibt ein elektrochemisches Element der eingangs genannten Gattung mit einem Dichtungselement aus Kohlenwasserstoffpolymeren, welches höheren Temperaturbeanspruchungen dadurch gewachsen sein soll, daß ihm ein Vernetzungsmittel zugegeben ist. Sobald das Polymer unter Wärmeeinfluß zu schmelzen beginnt, wird das Vernetzungsmittel aktiviert und das Polymer härtet aus, wobei dem Vorteil der größeren Härte der Nachteil einer größeren Gasdurchlässigkeit gegenübersteht.

Alkalische Sekundärzellen mit Zinkelektroden sind allgemein von dem Problem der Bildung von Zinkdendriten während der Ladung betroffen. Der DE-AS 2 232 153 läßt sich als wirksames Gegenmittel ein mehrschichtiger Separator entnehmen, bei dem ein die Mittelschicht bildendes und das Dendritenwachstum verhinderndes Membranmaterial wie z. B. regenerierte Cellulose von Saugschichten flankiert und auf diese Weise mechanisch geschützt ist.

Der Erfindung liegt die Aufgabe zugrunde, ein Primärelement anzugeben, welches insbesondere auch einem Betrieb bei hohen Temperaturen gewachsen ist, das rationell gefertigt werden kann, hohe Energiedichte besitzt, gut belastbar ist und sich durch gute Lagerfähigkeit auszeichnet.

Die Aufgabe wird bei einem gattungsgemäßen galvanischen Element mittels der im kennzeichnenden Teil des Anspruchs 1 genannten Merkmal gelöst. In den Unteransprüchen sind vorteilhaft weitere Ausführungsformen angegeben.

Das Primärelement gemäß der Erfindung wird anhand der Figuren 1 bis 3 näher erläutert.

Figur 1 gibt eine Schnittdarstellung der ganzen Zelle.

Figur 2 zeigt den Boden des Gehäusebechers vergrößert.

Figur 3 zeigt eine typische Entladekurve.

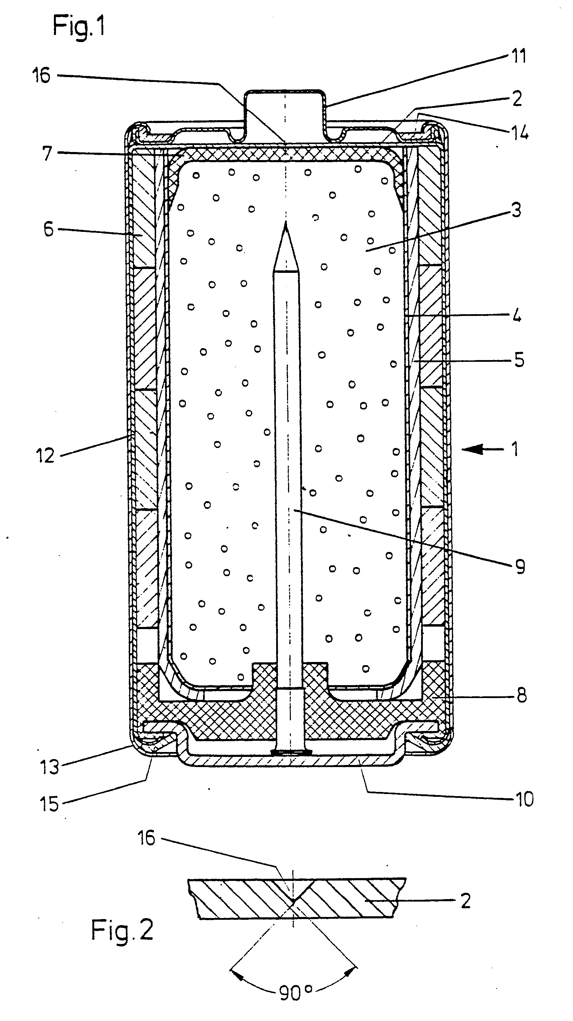

Nach Figur 1 ist der Gehäusebecher 2 des Primärelements 1 in konzentrischer Anordnung mit einer innen befindlichen Zinkpaste 3, welche die negative Elektrode bildet, einer diese umhüllende zweischichtige Separation 4, 5 und einer Außen befindlichen positiven Silber(I) oxid- oder Braunsteinelektrode, aus mehreren Preßlingen 6 zu einem größeren Ringzylinder zusammengesetzt, bestückt. Der Gehäusebecher 2 besitzt ferner eine isolierende Napfeinlage 7 aus Polytetrafluorethylen (PTFE), welche die Zinkelektrode in ihrem gesamten Querschnitt überdeckt.

Als innenliegende Separatorschicht 4 findet erfindungsgemäß ein Folienmaterial Verwendung, dessen wesentliche Eigenschaft die einer semipermeablen Ionenaustauscher-Membran ist. Das Folienmaterial basiert auf einer Grund- oder Stützmembran aus einem Kunststoff, vorzugsweise einem Polyäthylen niederer Dichte, welches durch eine spezielle Behandlung unter dem Einfluß ionisierender Strahlung eine dreidimensionale Vernetzung seiner Molekülketten aufweist und sich aufgrund dieser Konfiguration durch besondere Beständigkeit in allen Lösungsmitteln auszeichnet. Der elektrische Widerstand nimmt dabei mit dem Grad der Quervernetzung ab. Zusammen mit Folien aus Cellophan, die zumeist zwischen zwei Polyäthylenfolien liegen, werden sandwichartig geschichtete Laminate gebildet. Solche Verbundfolien, die unter der Bezeichnung PERMION®-Membranen bekannt sind, stellen eine Barriere gegen die Silber-Wanderung und gegen das gefürchtete Dendritenwachstum von Zinkelektroden dar, was sich in der erfindungsgemäßen Zelle besonders vorteilhaft auswirkt.

Die außenliegende Separatorschicht 5 besteht aus einem handelsüblichen Keramikpapier aus wärmebeständigen Fasern hoher Reinheit. Zur Herstellung derartiger Isolierpapier verwendet man beispielsweise Tonerdesilikatfasern oder Glasfasern mit unterschiedlichen Zusätzen an Füllstoffen, organischen Bindemitteln oder anderen Fasern, wobei auf bestimmte thermische und mechanische Eigenschaften gezielt Einfluß genommen werden kann. Die Papiere sind ausgezeichnete elektrische Nichtleiter. Sie sind chemisch beständig gegen den Angriff aggressiver Medien mit Ausnahme von Fluß- und Phosphorsäure sowie von konzentrierten Alkalien. Ihre löschblattähnliche Konsistenz und hohe Flexibilität, durch die sie sich von herkömmlichen Asbestpapieren unterscheiden, macht das erfindungsgemäß verwendete Keramikpapier als Separatoreinlage besonders geeignet. In der Separatorschicht 5 ist auch die Hauptmenge des alkalischen Tränkelektrolyts enthalten.

Das offene Ende des Gehäusebechers 2 ist von einem Dichtungselement 8 aus temperaturbeständigem Kunststoff, vorzugsweise Polytetrafluorethylen wie z. B. « Teflon® PF A 340 », durch welches sich der zentrale negative Stromableiter 9 aus Messingdraht hindurcherstreckt, verschlossen und über der dem Dichtungselement peripher aufliegenden Bodenkontaktscheibe 10 dicht verbördelt. Die Bodenkontaktscheibe 10 bildet zugleich den negativen Zellenpol.

An der Außenseite des Bodens des Gehäusebechers 2 liegt die den positiven Zellenpol bildende Abschlußkappe 11 unmittelbar an und steht damit in elektrischleitendem Kontakt zur positiven Elektrode 6.

Zur Komplettierung ist die Zelle unter Zwischenlage einer Papierabdeckung 12 in einem Blechmantel 13 verpackt. Die Ränder des beidseitig offenen Blechmantels sind über dem oberen und dem unteren Rand der Zelle dem jeweils ein Isolierring 14, 15 aus kaschiertem Karton aufgelegt ist, eingebördelt.

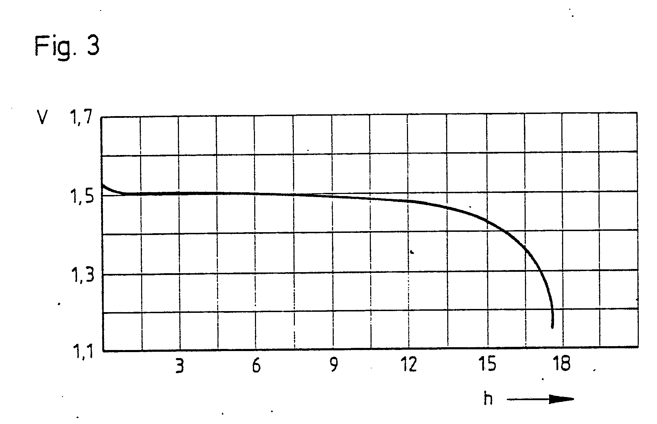

Als besonders vorteilhaft hat es sich erwiesen, wenn, wie in Figur 2 dargestellt, der Boden des Gehäusebechers 2 erfindungsgemäß mit einer Sollbruchstelle in Form einer Einkerbung 16 versehen ist. Die Einkerbung befindet sich an der Außenseite des Becherbodens und hat eine Tiefe, die von der originalen Wandstärke des Bechers aus vernickeltem Stahl nur etwa 35 % übrigläßt. Sie erstreckt sich dabei durch die Mitte des Becherbodens und über eine Länge, die etwa 70 % seines Durchmessers entspricht. Die Seitenwände der Einkerbung sind um 90° gegeneinander geneigt. Unter Berücksichtigung der Fertigungstoleranzen ist die Sollbruchstelle so ausgelegt, daß der Berstdruck mindestens 65 bar, höchstens jedoch 85 bar beträgt.

Es hat sich ferner als vorteilhaft herausgestellt, für die erwähnten Kunststoffteile, nämlich die Napfeinlage 7 und das Dichtungselement 8, ein PTFE-Material zu wählen. Das erfindungsgemäße Primärelement ist damit bei den vorgesehenen hohen Betriebstemperaturen auch allen Sicherheitsanforderungen bezüglich Explosionsgefahr und Laugeaustritt vollauf gewachsen.

Die Entladekurve eines Primärelements gemäß der Erfindung nach Figur 3 wurde bei + 163 °C aufgenommen. Bei einem Lastwiderstand von 7,5 betrug der anfängliche Entladestrom 200 mA.

## Patentansprüche

1. Bei hoher Temperatur entladbares galvanisches Primärelement mit alkalischem Elektrolyten, negativer Zinkelektrode, positiver Silber(I)-oxid- oder Braunsteinelektrode und mit einem becherförmigen Metallgehäuse, welches in konzentrischer Anordnung eine innere Zinkelektrode und eine äußere positive Elektrode in Form eines Ringzylinders mit zwischenliegendem Separator enthält, wobei das offene Ende des Metallgehäuses mit einer Dichtung aus Kunststoff verschlossen ist, durch welches sich der negative Stromableiter erstreckt, dadurch gekennzeichnet, daß der Separator aus mindestens zwei Schichten gebildet ist, deren innere aus einer semipermeablen Ionenaustauschermembran (4) besteht und deren äußere aus einem temperaturbeständigen Keramikmaterial (5) besteht, und daß das becherförmige Metallgehäuse eine den Querschnitt der Zinkelektrode überdeckende Napfeinlage (7) aus temperaturbeständigem Kunststoff besitzt.

2. Galvanisches Primärelement nach Anspruch 1, dadurch gekennzeichnet, daß der Boden des becherförmigen Metallgehäuses (2) mit einer Sollbruchstelle in Form einer Einkerbung (16) versehen ist.

3. Galvanisches Primärelement nach den Ansprüchen 1 und 2, dadurch gekennzeichnet, daß die Dichtungen aus Polytetrafluorethylen (PTFE) sind.

4. Galvanisches Primärelement nach den Ansprüchen 1 bis 3, dadurch gekennzeichnet, daß das Keramikmaterial aus wärmebeständigen Fasern besteht.

## Claims

1. A galvanic primary cell which may be discharged at high temperature with alkaline electrolytes, a negative zinc electrode, a positive silver (I) oxide or manganese dioxide electrode and having a beaker-shaped metal casing, which contains, arranged concentrically with the casing, an inner zinc electrode and an outer positive electrode in the form of a circular cylinder with a separator between them, the open end of the metal casing being sealed with a plastics seal, through which the negative current conductor projects, characterised in that the separator is composed of at least two layers, the inner layer consisting a semi-permeable ion-exchanging membrane (4) and the outer layer of which consists of a temperature-resistant ceramic material (5), and in that the beaker-shaped metal casing has a bowl inset (7) made of temperature-resistant plastics covering the transverse section of the zinc electrode.

2. A galvanic primary cell according to claim 1, characterised in that the bottom of the beaker-shaped metal casing (2) is provided with a predetermined breaking point (16) in the form of a notch.

3. A galvanic primary cell according to claims 1 and 2, characterized in that the seals are made of polytetrafluorethylene (PTFE).

4. A galvanic primary cell according to claims 1 to 3, characterised in that the ceramic material consists of heat-resistant fibres.

## Revendications

1. Elément galvanique primaire susceptible d'être déchargé à haute température, avec un électrolyte alcalin, une électrode négative en zinc, une électrode positive en oxyde d'argent (I) ou en bioxyde de manganèse, et avec un bac métallique en forme de godet, qui renferme, selon une disposition concentrique, une électrode interne en zinc et avec un séparateur interposé, une électrode positive externe revêtant la forme d'un cylindre annulaire, l'extrémité ouverte du bac métallique étant fermée par un joint d'étanchéité en matière plastique, à travers lequel passe la sortie de courant négative, élément caractérisé en ce que le séparateur est constitué par au moins deux couches, la couche interne étant constituée d'une membrane échangeuse d'ions semi-perméable (4), tandis que la couche externe est constituée d'un matériau céramique (5) résistant à la température, le bac métallique en forme de godet comportant une garniture intérieure en forme de cuvette (7) en un matériau résistant à la température, qui recouvre la section transversale de l'électrode de zinc.

2. Elément galvanique primaire selon la revendication 1, caractérisé en ce que le fond du bac métallique (2) en forme de godet, est muni d'un emplacement préférentiel de rupture sous la forme d'une entaille (16).

3. Elément galvanique primaire selon les revendications 1 et 2, caractérisé en ce que les joints d'étanchéité sont en polytétrafluoréthylène (PTFE).

4. Elément galvanique primaire selon les revendications 1 à 3, caractérisé en ce que le matériau céramique est constitué de fibres résistantes à la chaleur.

Fig.1

Fig.2

Fig. 3